**Europäisches Patentamt**

**European Patent Office**

**Office européen des brevets**

(19)

(11) **EP 1 065 593 A1**

(12) **EUROPEAN PATENT APPLICATION**

| | |
|---|---|
| (43) Date of publication:<br>**03.01.2001 Bulletin 2001/01** | (51) Int Cl.$^7$: **G06F 9/46**, G06F 1/00 |

(21) Application number: **99480057.1**

(22) Date of filing: **02.07.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Molva, Refik**<br>**06560 Valbonne (FR)**<br>• **Loureiro, Sérgio**<br>**06250 Mougins (FR)** |
| (71) Applicant: **Institut Eurecom G.I.E.**<br>**06904 Sophia-Antipolis (FR)** | (74) Representative: **Schuffenecker, Thierry**<br>**97, chemin de Cassiopée,**<br>**Domaine de l'étoile**<br>**06610 La Gaude (FR)** |

(54) **Process for securing the execution of a mobile code in an untrusted environment**

(57)     A process is disclosed for securing the execution of a mobile code in a Information Handling System (I.H.S.) (30) having a function which can be represented on a matrix F . The function is being encrypted by means of an Error-Correcting Code (E.C.C.) transformation, where the code is preferably a GOPPA code. The transformation produces an encrypted matrix F' = FGP + E, where G is a generating matrix for an (n, k, d) algebraic block code C, P is a nxn random permutation matrix and E a kxn random matrix where at least n-t columns consists of a null vector. Since the Encrypted matrix F' is still a matrix, the mobile code which is encrypted is still executable in a user's environment.

```
┌─────────────────────────────┐
│   Securing Program Setup in  │
│        Server 10             │
└─────────────────────────────┘        — 100
              │
              ▼
┌─────────────────────────────┐
│  Transmission to computer 30 │
└─────────────────────────────┘        — 110
              │
              ▼
┌─────────────────────────────┐
│  Encryption function evaluation │
│        in computer 30        │
└─────────────────────────────┘        — 120
              │
              ▼
┌─────────────────────────────┐
│ Transmission of result to server 10 │
└─────────────────────────────┘
                                        130
              │
              ▼
┌─────────────────────────────┐
│  Retrieval of cleartext result in │
│        Server 10             │
└─────────────────────────────┘        140
```

Fig. 2

EP 1 065 593 A1

## Description

## Technical field of the invention

The invention relates hiding functions techniques and more particularly to a process for securing the execution of a mobile code which is executed in remote computers.

## Background art

The communication between computers and more generally Information Handling Systems (I.H.S.) has been widely expanded in the recent years. With the development of the telecommunication networks, for instance SNA, the French network TRANSPAC, the Public Switched Telecommunication Networks (P.S.T.N.) via modems, the Public Land Mobile Networks (P.L.M.N.) , but also the explosion of the Internet, all kinds of transactions are made possible between remote systems which are located at different geographical areas.

The tremendous progress in the telecommunication facilities between the IHS systems raises the question of security and integrity of the sensitive information - particularly that of pure _data_ as well as mobile _programs_ , which are exchanged between the computers and conveyed through the network. This is now a major issue, which is likely to limit the development of transactions between remote computers. Indeed, when two I.H.S. systems are communicating to each other, it is essential that the risks of attacks which might occur on the networks are reduced as much as possible. These attacks might either occur at one point of the network, but also on one end of the transaction when one computer or IHS system is what can be called an "untrusted" environment.

Generally speaking, the integrity and the security in the pure _data_ has received some effective solutions, which are based on cryptography, encryption, message authentication, integrity verification etc...

A well known technique which has received a tremendous development is the "smart card" technology that permits to substantially enhance the security of the transactions. Derived forms of tamper proof hardware systems have also been designed for achieving that goal of securing the data. Basically, the tamper proof hardware constitutes a personal trusted platform.

Abadi, Feigenbaum and Kilian have particularly focused on the problem of the dichotomy between programs and inputs, which can belong to different entities, in the article _"On hiding information from an oracle",_ in Journal of Computer and System Sciences, 39 (1); p. 21-50, August 1989.

While that security of the _data_ receives some useful and effective solutions, the question of securing a _program_ being received through a network or either installed by means of the traditionnal diskettes or CD ROM and which is to be executed in a remote IHS system (and untrusted environment) still appears critical.

Considering for instance the very simple situation of a program which is conveyed from one computer to another computer via the Internet network, for instance an applet in java bytecode or a mobile agent. Indeed, when an user is surfing on the Internet, his computer may automatically receive some applets from the site he is visiting and these applets are specific programs received from the visited website and which are to be executed in the user's environment. Obviously, an applet may include some sensitive portions of the website owner and is likely to incorporate some confidential algorithms or functions which the website owner may wish to keep confidential and private. Sensitive parts of the applet may be involved when, for instance, the user requests the establishment of a transaction involving the control of some confidential information such as a credit card number, a password etc... It is therefore highly desirable that the program which is being executed at the remote side be protected - either from any non authorized disclosure but also from any non authorized modification - in order to ensure the integrity of the transaction, but also the confidentiality of the algorithms which are inside the code.

Therefore, as it appears from the example above, the advent of new techniques which are based on mobile code raises the concern of the privacy and the integrity of the software programs. These programs and functions are designed to be executed in some "untrusted" environments, where attacks might occur , ie unauthorized reverse engineering or extensive code analysis for the purpose of disclosing some secret information or function.

Obviously the known techniques for encrypting data are not applicable since the program should remain executable in a computer(the untrusted environment), that is to say should be loadable, and then still constitute object code that has to control the execution of the different technical steps performed by the machine. But the dilemma is that if the program is executable, it is still readable and thus likely to be disclosed and altered in a malicious way: how to allow the execution of the program in a standard machine and untrusted environment, while keeping sufficient secrecy to the internal mechanisms which are involved by the program? How to protect the internal functions and algorithms from unauthorized disclosure and alteration, while providing a code which remains executable in a "untrusted" environment?

A partial solution to this problem was elaborated to allow some software protection by function hiding. This known technique was designed by Sander and Tschudin and reported in the articles "On software protection via function hiding", _in Proceeding of the second workshop on Information Hiding,_ Portland, Oregon, USA, April 1998, and in Towards mobile cryptography" _in Proceeding of the 1998 IEEE Symposium on Security and Privacy, Oakland, California, May 1998._ However, this technique which is based on the use of quadratic residues for encrypting a function is only limited to the restricted range of polynomial functions.

Other solutions covering other types of functions are still desirable and other techniques than using quadratic residues.

**Summary of the invention**

The technical problem to be solved by the present invention is to provide a process for encrypting an executable program or code, involving a matrix evaluation, and which remains executable after the encryption effect.

It is an object of the present invention to permit the secure execution of mobile code containing sensitive or confidential information into an untrusted Information Handling System (I.H.S.),

It is a further object of the present invention to achieve integrity of a computer program which is executable, by protecting the confidential and sensitive information that is therein loaded, against attacks such as unauthorized disclosure and alteration.

It is an additional object of the present invention to provide means for enhancing the security of an executable mobile code which contains the evaluation of a matrix function, without interaction with any kind of trusted host..

The technical problem is solved by the present invention which is defined in the independent claim 1. Basically, the program to be secured is assumed to involve a function which can be reduced to a matrix F. Prior to its transmission to the user environment, the matrix F is being encrypted by means of an algorithm which is based on Error Correcting Codes (ECC) in order to derive a matrix E(F). Except for the matrix evaluation the whole program remains in "clear" object code so that the whole program can be transmitted and executed in the user's environment as an applet or java code for instance, but can also be provided in the traditional diskettes or CD ROM package software.

Since many problems are likely to be reduced to a matrix evaluation, like demonstrated in the book "The Design and Analysis of Computer Algorithms" by Aho, Hopcroft and Ullman, Addison-Wesley, 1974, the invention appears to be of a wide application.

More particularly, the transformation of the matrix F is based on public key encryption using Error-Correcting Codes.

The ECC technique is based on the use of algebraic block codes. Preferably, Goppa codes are used and this achieves a high degree of security against many different types of attacks.

In a preferred embodiment of the invention, the matrix F to be secured is encrypted in accordance with the following formula:

$$E(F) = FGP + E$$

where G is a generating matrix for a (n, k, d) block code, P is a nxn random permutation matrix and E a kxn random matrix where at least n - t columns consist of the null vector, and n, d and t are integers. The function E(F) is then hidden within the executable code in lieu of the original function F and the latter is transmitted or shipped to an untrusted environment. Since the E(F) appears to be still a matrix, the mobile code is still executable. The execution of the latter causes the evaluation of an input vector x by the encrypted matrix E(F) and produces a result which can resist to the malicious attacks.

In one embodiment of the invention, when a high degree of security is required, the result can then be transmitted to the originating code transmitter, for instance to the website that has generated the applet, for the final evaluation of the result in order to regenerate the original matrix F(x) computing.

In another embodiment of the invention, the last decoding of the result E(F)(x) is performed within the untrusted environment, possibly with the use of some additional tamper proof hardware such as a smart card. In order to reduce the amount of memory and digital resources being required a less demanding block code can be used, such as Reed-Solomon code, but with a lower degree of security .

**Description of the drawings**

Embodiments of the invention will now be described, by way of example only, with reference to the accompanying drawings, wherein:

Figure 1 illustrates a basic environment between two IHS systems that are communicating via an Internet network.

Figure 2 is a drawing showing the basic steps of the process for running a program in a secure condition in accordance with the present invention.

Figure 3 is an alternative embodiment of the invention based on the use of a tamper proof hardware for performing the decoding of the E(F) encrypted matrix.

Figure 4 illustrates an embodiment of the invention in a database application.

**Description of the preferred embodiment of the invention**

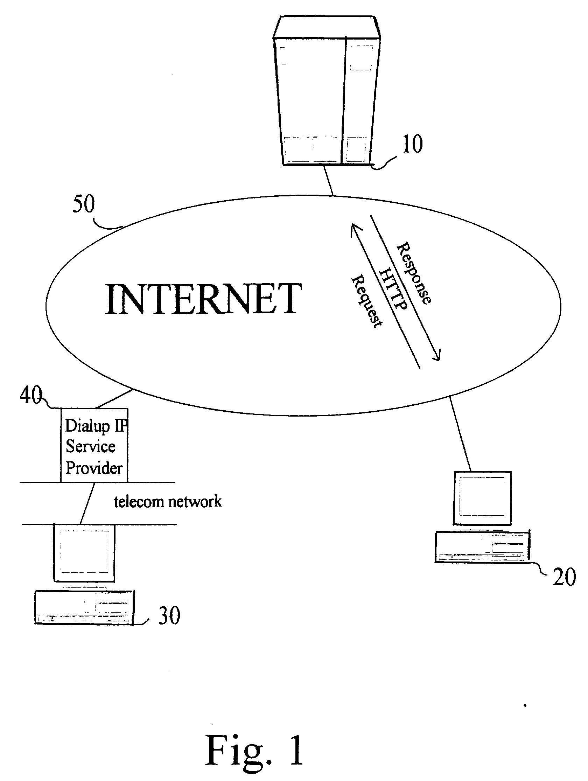

With respect to the figure 1 there is shown a basic environment which can take advantage of the present invention in order to achieve secure transactions on the Internet network. Of course, the invention is not restricted to the Internet network, but is applicable to other networks. In the example which is considered, a first I.H.S. system 10 of a financial institution, for instance a server, has an access to the Internet network 20 and may provide some financial services to the users. Generally speaking the I.H.S. system has a direct connection to the Internet, what is known to be a "network access". One user may have also a direct access to the Internet network by means of a second IHS system 20. When the user has no direct access, he receives one via an Internet Service provider (ISP) 40 which permits his computer 30 to exchange requests and answers, for example HTTP, with the server 10.

When the user is surfing on the Internet, either by means of system 20 or 30, he may receive on his system from the network an executable program such as a Java applet ,a javascript or a mobile agent.

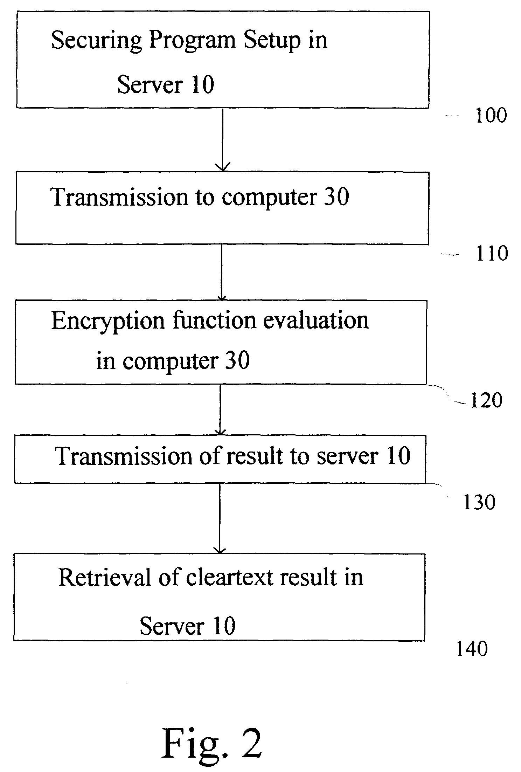

With respect to figure 2, there will be now described how an executable code which is received from server 10 can be executed in computer 20 or 30 (being considered an untrusted environment) while permitting a secure transaction and preserving the privacy of the critical parts of the code in a secure way. The program to be secured in assumed to comprise at least one part or algorithm which can be reduced to a matricial computation, and represented for instance by a k x k matrix F, which may be squared, but not exclusively. It should be noticed that many parts of a program are likely to be reduced and represented by a matrix. This is the case of some encryption evaluations and even a Boolean function evaluation which has to determine a decision upon the evaluation of some criteria may be represented by a matrix. The invention is based on an encryption of this particular function or matrix by means of an Error-Correcting Code (E.C.C.) in order to derive an encrypted entity E(F) which is still a matrix. Since the remaining part of the program remains in "clear" Object Code Only (OCO), the whole program is still executable and can be transmitted to the untrusted environment by the considered transmission way, the Internet network in the example.

More particularly, when server 10 wishes to transmit an Applet to computer 20 that involves an evaluation step being based on a matrix evaluation F, the latter generates a substituted matrix E(F) in a securing program setup or function hiding setup step 100. This is achieved by means of a transformation which is based on Error Correcting Codes (E.C.C.). As known by the skilled man, E.C.C. were originally used for correcting random errors that might occur in the transmission of binary data through a noisy channel. Briefly, this is based on the use of a generating matrix G for a (n, k, d) code. Assuming that $x$ is the binary k-tuple which is to be transmitted through the noisy channel. The transmitter then encodes $x$ as the n-tuple y = l G and the latter is transmitted through the channel. At the receiving side, and assuming that the n-tuple r is received - which might be different from the original y - the receiving party will decode r by means of the strategy of the nearest neighborhood which returns the codeword y' what, eventually, produces the k-tuple $x'$ such as y' = $x'$ G. Since the y and y' should be equal, this should ensure that $x' = x$.

In the preferred embodiment of the invention, the mechanism is based on an algebraic block code, and more particularly on Goppa codes. In this case, the generating matrix is obtained with a polynomial of degree t and with a generating vector $\in GF(q)^n$, called a Goppa polynomial. The decoding of Goppa codewords requires the knowledge of the generating vector and either the weights vector or the Goppa Polynomial.

The parameters of a [n, k, d] binary Goppa code have the following relationships: $n = 2^m$, $d = 2t +1$ and $k = n-mt$, where t is the maximum number of errors the code is able to correct. References to the Goppa codes may be found in F. Mac Williams et N. Sloane, *The theory of Error-Correcting Codes,* North-Holland, 1977.

As mentioned above, the function hiding setup step 100 of the present invention is based on the use of a ECC based encryption. Indeed, let G be a generating matrix for a (n, k, d) Goppa code C. Let P be a nxn random permutation matrix and E a kxn random matrix where at least n-t columns consists of a null vector. G, P and E are assumed to be secret and kept into the secure server 10. Let now F be a kxk matrix over a finite field which represents a function which is considered vital and highly critical by the server manager. In step 100 , the server 10 computes the encrypted function F' in accordance with the following formula:

$$F' = FGP+ E$$

The result of the computation of F' is then aggregated into the mobile code in lieu of the original code comprising the matrix F and transmitted to the user's environment, either systems 20 or 30, by means of a communication network. Particularly, this transmission may take the form of an Applet or java code or any other means of transporting a code (usually called a mobile agent). It should be noticed that since only the matrix F has been encrypted in accordance with the teaching of the invention, the whole part of the mobile code still remains an executable code which can be executed into the untrusted environment of the user's system, either system 20 or 30.

Step 110 is the transport of the mobile code to the user's environment, for instance system 30.

Then, step 120, the process proceeds with the encryption function evaluation in the untrusted environment. This is achieved by means of the execution of the code in the user's system, and the computation of the inputs that the user may enter by the encrypted matrix E(F). It should be noticed that the mobile code may handle sensitive and critical data, such as password or credit card number without security concern problems because the sensitive data are not transported to the Internet in clear text format and thus are not exposed to malicious attacks. This is an important advantage since the invention does not need any secure or private lines for the communications between the Server 10 and the user's environment or system 30. Assuming that the input vector x is comprised by an account number and a password :

$$x = \{\text{account number; password}\}$$

the execution of the mobile code into the user's environment causes the computation of the result: E(F)(x) , which achieves a great resistance to malicious attacks since the original matrix F is not accessible into the user's environment. Additionally, the use of Goppa codes has revealed to provide a high immunity to the various attacks that a system might suffer.

In a step 130, the result of the encryption function evaluation is transported back through the network to the server 10. Since the original matrix F is not transported to the network, the result is not subject to a possible extensive code analysis or reverse engineering at any point of the network and, therefore, the result of the encryption function evaluation is normally not subject to any reverse analysis.

In step 140, the server 10 decodes the result that was received from the user's computer 30 in order to generate again the result of the original matrix when applied to the input vector x that was entered by the user's computer 30.

More particularly, the server 10 decrypts the result $y_1 = y'P^{-1}$ and uses C's secret decoding algorithm to retrieve the cleartext result y = x F from the formula:

$$Y_1 = xFG + x\,EP^{-1} \ .$$

Therefore, in accordance with the decision rules contained in the matrix, a safe decision may be taken relating to the particular request that was filed by the user, i.e. the result of the transaction in a secured condition.

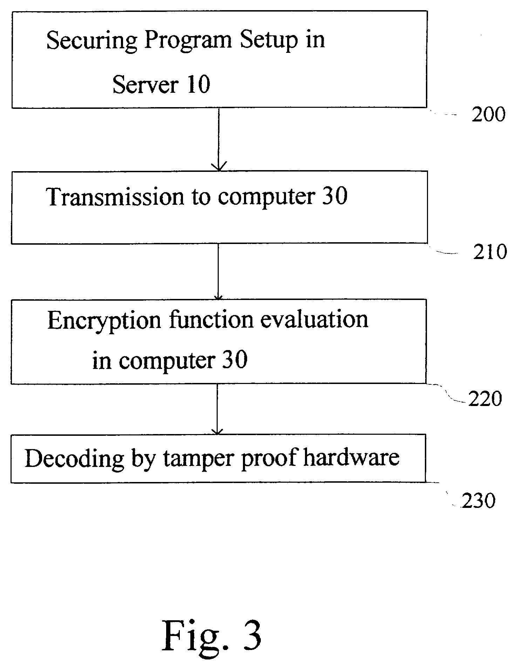

With respect to figure 3 there is shown an alternative processing which may be used in accordance with the teaching of the present invention. In this processing, the last decoding of the result E(F)(x) is still decoded within the user's environment. Obviously the security level is lower than the level that can be achieved by means of the process of figure 2 where the original matrix F absolutely remains into a "trusted" environment. However this technique still provides an enhancement of the security if some additional tamper proof hardware elements can be associated.

Steps 200, 210 and 220 are respectively identical to the steps 100, 110 and 120 of the figure 2. Therefore, considering still the case of an applet or java bytecode, the server 10 may transmit to the user's environment 30 an applet which incorporates an encryption of a matrix function F with an executable code. The execution of the code within the user's environment then produces a result which may comprises some sensitive data, such as the account number of the user, or a password. The result of the computation of E(F)(x) is then decoded in a step 230 by means of accessing a tamper proof hardware, such as a smart card, which contains in its secured portion the decoding mechanism of the function F. Therefore, step 230 causes the decryption of the result $y_1 = y'P^{-1}$ on the basis of the C's secret decoding algorithm in order to retrieve the cleartext result y = x F from the formula:

$$Y_1 = xFG + x\,EP^{-1}$$

Obviously, in this alternative embodiment of the invention, a less complex E.C.C. code such as a Reed-Solomon code may be useful in order to reduce the amount of processing and the memory which is required in the tamper proof hardware, particularly when a smart card is to be used.

It should be noticed that the tamper proof hardware, or the smart card may be associated in different ways according to its particulary involvement in the decoding process of E(F). Indeed, the smart card may be associated to directly decode the contents of the result of the computation step of 220, or also, in an alternative way, is simply used for ciphering part of the codes which is then to be executed in the user's computer. The particular approach to be used depends on the level of security which is required and also the memory resources of the tamper proof hardware .

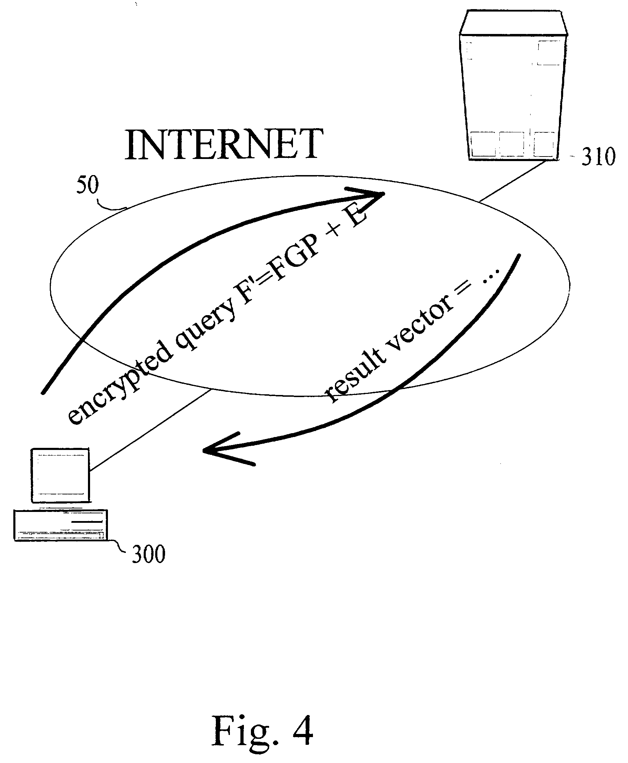

In figure 4, there is shown a particular embodiment of the invention in a data base query application. In this application, by means of the use of the encryption mechanism based on Error-Correcting Codes, an user is given the possibility to make a query to the data base and be returned the solution while keeping the security and confidential on the query. This is an application of private information retrieval. This is permitted by the invention because the query is a particular elementary program which can be reduced to a matrix F. Therefore, when the user 300 makes a query to a data base 310, the query is being encrypted in accordance with the formula F' = FGP + E with G being a generating matrix for an (n, k, d) Goppa code C, P a nxn random permutation matrix and E a kxn random matrix where at least n-t columns consists of a null vector. Thefore the encrypted query E(F) is transmitted to the database which processes it and returns a vector which is E(F)(x) which can be transmitted again through the unsecured network, such as the Internet network, to the user 300. The latter may then decodes the result vector $y_1 = y'P^{-1}$ and uses C's secret decoding algorithm to retrieve the cleartext result y = x F from the formula:

$$Y_1 = xFG + x\,EP^{-1}$$

The invention may be used for permitting free testing of programs or also the pay per result programs. In this application, server 10 may provides via the network the sources to the computer 20 or 30. Since the source is processed in accordance with the present invention, each time computer 20 or 30 requires a result, server 10 maintains a on line connection that decrypts the results. Then server 10 can control the free of charge duration of the execution of the software, and it is tamper proof against attacks to the clock of machines 20 or 30. In the same scenario, server 10 can release software in a pay per result basis, ie, the users 20 or 30 only pay per result obtained and not the software itself. The invention allows to address this 2 scenario in a secure way.

It therefore appears on this particular example that the invention provides an easy way to keep in secrecy mobile code, database queries and test programs even when the latter are transported through unsecured communication networks and executed in untrusted environments.

## Claims

1. Process for securing the execution of a mobile code in a Information Handling System (I.H.S.) (30) having a function which can be represented on a matrix F , characterized in that said function is encrypted into said mobile code by means of a transformation which is based on Error-correcting codes before it is executed into said computer system.

2. Process in accordance with claim 1 characterized in that it is based on an algebraic block code transformation in accordance with the formula:

$$F' = FGP + E$$

where G is a generating matrix for an (n, k, d) algebraic block code C, P is a nxn random permutation matrix and E a kxn random matrix where at least n-t columns consists of a null vector.

3. Process in accordance with claim 2 characterized in that said algebraik block code is a Goppa code.

4. Process according to claim 2 or 3 characterized in that said it is used for securing a transaction between a first Information Handling System (I.H.S.) (10) and a second I.H.S. system (20, 30), characterized in that it involves the steps of:

transmitting (110) from said first system (10) to said second system (20) a mobile code having a matrix F which is transformed in accordance with said algebraic block code transformation;

executing (120) said mobile code into said second system (20, 30) in to compute the result of said transformed matrix E(F) applied on the inputs (x) which are provided by the user of said second system (20, 30);

transmitting (130) the result of said computation to said first system (10);

decoding said result (140) into said first system in order to compute the matricial evaluation of F applied on the inputs provided by the user of said second system (20, 30) in accordance with the formula:

$$y_1 = y'P^{-1} \text{ and}$$

using C's secret decoding algorithm to retrieve the cleartext result y = x F from the formula:

$$Y_1 = xFG + x\ EP^-$$

5. Process according to claim 4 wherein said result E (F)(x) is not transmitted to said first I.H.S. system (10) but is still performed into said second I.H.S. system (20, 30), associated with some ciphered processing.

6. Process according to claim 5 wherein said decoding of the result E(F)(x) is executed in associated with a tamper proof hardware element, for instance a smart card.

7. Process according to anyone of the preceding claims wherein said first and said second I.H.S. systems (10, 20, 30) are connected to the Internet network (or other kind of network, can be even a diskette) and that said second system (20, 30) receives some (applets or javascript) code from said first I.H.S. system (10) which are to be secured.

8. Process according to anyone of the preceding claims characterized in that it is applied to a database application wherein said first I.H.S. systems (10) makes queries to access said second system which is a database, and wherein said queries are encrypted in accordance with an Error-Correcting Codes transformation and still remain executable into said database.

9. Apparatus comprising means for performing the process defined in anyone of the preceding claims.

50

INTERNET

Response
HTTP
Request

10

40

Dialup IP
Service
Provider

telecom network

30

20

Fig. 1

| Securing Program Setup in Server 10 |
| :---: |

— 100

| Transmission to computer 30 |
| :---: |

— 110

| Encryption function evaluation in computer 30 |
| :---: |

—120

| Transmission of result to server 10 |
| :---: |

130

| Retrieval of cleartext result in Server 10 |
| :---: |

140

# Fig. 2

```
┌─────────────────────────────────┐
│   Securing Program Setup in      │
│        Server 10                 │
└─────────────────────────────────┘
                                    ── 200
                 │
                 ▼
┌─────────────────────────────────┐
│   Transmission to computer 30    │
│                                  │
└─────────────────────────────────┘
                                    ── 210
                 │
                 ▼
┌─────────────────────────────────┐
│   Encryption function evaluation │
│        in computer 30            │
└─────────────────────────────────┘
                                    ── 220
                 │
                 ▼
┌─────────────────────────────────┐
│  Decoding by tamper proof hardware│
└─────────────────────────────────┘
                                    ── 230
```

# Fig. 3

INTERNET

50

encrypted query F'=FGP + E

result vector = ...

310

300

Fig. 4

**European Patent Office**

**EUROPEAN SEARCH REPORT**

Application Number

EP 99 48 0057

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| D,A | SANDER T ET AL: "TOWARDS MOBILE CRYPTOGRAPHY" IEEE SYMPOSIUM ON SECURITY AND PRIVACY,US,LOS ALAMITOS, CA: IEEE COMPUTER SOC, vol. CONF. 19, 1998, page 215-224 XP000825840 ISBN: 0-7803-4994-6 * the whole document * | 1,4,9 | G06F9/46 G06F1/00 |
| A | ADAMS C M ET AL: "SECURITY-RELATED COMMENTS REGARDING MCELIECE'S PUBLIC-KEY CRYPTOSYSTEM" PROCEEDINGS OF THE CONFERENCE ON THEORY AND APPLICATIONS OF CRYPTOGRAPHIC TECHNIQUES (CRYPTO),DE,BERLIN, SPRINGER, vol. CONF. 7, page 224-228 XP000130207 * the whole document * | 1-3,8 | |
| D,A | ABADI M ET AL: "On hiding information from an oracle" SECOND ANNUAL CONFERENCE ON STRUCTURE IN COMPLEXITY THEORY, ITHACA, NY, USA, 16-19 JUNE 1987, vol. 39, no. 1, pages 21-50, XP002125114 Journal of Computer and System Sciences, Aug. 1989, USA ISSN: 0022-0000 * the whole document * | 1 | TECHNICAL FIELDS SEARCHED (Int.Cl.7) G06F |

The present search report has been drawn up for all claims

| Place of search | Date of completion of the search | Examiner |
|---|---|---|
| THE HAGUE | 14 December 1999 | Michel, T |